# EUROPEAN PATENT SPECIFICATION

(11) **EP 4 109 615 B1**
(45) Date of publication and mention of the grant of the patent: **28.01.2026**
(21) Application number: 22749970.4
(22) Date of filing: 28.01.2022
(51) Int. Cl.: H01M 10/04, H01M 50/466, H01M 50/403, H01M 10/0525

(54) **SHEET CUTTING AND FUSION APPARATUS**
VORRICHTUNG ZUM SCHNEIDEN UND BINDUNG VON BLÄTTERN
APPAREIL DE COUPE ET LIAISON DE FEUILLE

(30) Priority: 05.02.2021 KR 20210016767
(43) Date of publication of application: 28.12.2022
(73) Proprietor: LG Energy Solution, Ltd., Seoul 07335 (KR)
(72) Inventor: LEE, Hyeon Jin, Daejeon 34122 (KR); KIM, Sang Wook, Daejeon 34122 (KR); PARK, Sung Chul, Daejeon 34122 (KR); PARK, Sin Young, Daejeon 34122 (KR); PARK, Dong Hyeuk, Daejeon 34122 (KR); LEE, Ji Woon, Daejeon 34122 (KR)
(74) Representative: Plasseraud IP
(86) International application number: PCT/KR2022/001577
(87) International publication number: WO 2022/169220

(56) References cited:
- EP-A1- 2 866 293
- EP-A1- 2 940 775
- JP-A- 2006 019 199
- JP-A- 2019 204 668
- KR-A- 20170 034 770
- KR-B1- 101 750 602
- KR-B1- 102 169 008
- US-A1- 2017 084 897
- US-A1- 2018 342 710

## Description

### [Technical Field]

This application claims the benefit of priority to Korean Patent Application No. 2021-0016767 filed on February 5, 2021.

The present invention relates to a sheet cutting and fusion apparatus. More particularly, the present invention relates to a sheet cutting and fusion apparatus including a structure in which steps are formed at an upper cutter and a lower cutter such that two or more sheets can be simultaneously cut and fused.

### [Background Art]

A lithium secondary battery may be manufactured using a method of receiving an electrode assembly, configured to have a structure in which a positive electrode, a sheet, and a negative electrode are sequentially stacked, in a battery case and hermetically sealing the battery case.

A sheet cutting and fusion apparatus according to the present invention is applicable to any sheet as long as the sheet is thin, as in a separator used in a battery, and is configured such that a part of one sheet and a part of another sheet can be melted and coupled to each other. When a sheet described throughout the specification is applied to a battery, the sheet refers to a separator that is generally used.

The electrode assembly includes a single-cell configured to have a structure in which a first electrode and a sheet are stacked, a mono-cell configured to have a structure in which a first electrode, a sheet, and a second electrode are stacked, or a bi-cell configured to have a structure in which a first electrode, a sheet, a second electrode, a sheet, and a third electrode are stacked. In addition, a sheet may be further added to an outer surface of the first electrode or the second electrode of the mono-cell, or a sheet may be further added to an outer surface of the first electrode or the third electrode of the bi-cell.

Each of the electrodes constituting the electrode assembly is manufactured by applying an electrode mixture to one surface or opposite surfaces of a thin current collector made of copper, aluminum, or nickel, drying and pressing the same, and cutting the same into a unit electrode.

The unit electrode thus manufactured is stacked and laminated in the state in which a sheet is interposed between a positive electrode and a negative electrode, whereby a unit cell is manufactured.

In the mono-cell, the sheet is interposed between the first electrode and the second electrode, and another sheet is located at the surface opposite the surface of the first electrode or the second electrode that faces the sheets.

In order to manufacture a unit cell configured such that two electrodes and two sheets are stacked or a unit cell configured such that two electrodes and two or three sheets are stacked, as described above, the first sheet having the first electrode disposed thereon and the second sheet having the second electrode disposed thereon are disposed and laminated such that the first electrode and the second electrode overlap each other, and then the first sheet and the second sheet are cut.

The first sheet and the second sheet are moved to a subsequent step of the process in the state in which the first sheet and the second sheet are cut. When the first sheet and the second sheet are folded or deviate from the original positions thereof, the electrodes may be exposed, which may cause serious problems related to safety, such as short circuit in a battery cell and outbreak of fire during use of the battery cell.

In connection therewith, FIG. 1 is a schematic view of a conventional sheet cutting apparatus, FIG. 2 is a sectional view showing a sequence of sheet cutting performed by the conventional sheet cutting apparatus, and FIG. 3 is a schematic view showing the construction of an upper cutter and a lower cutter when the conventional sheet cutting apparatus is applied to two sheets.

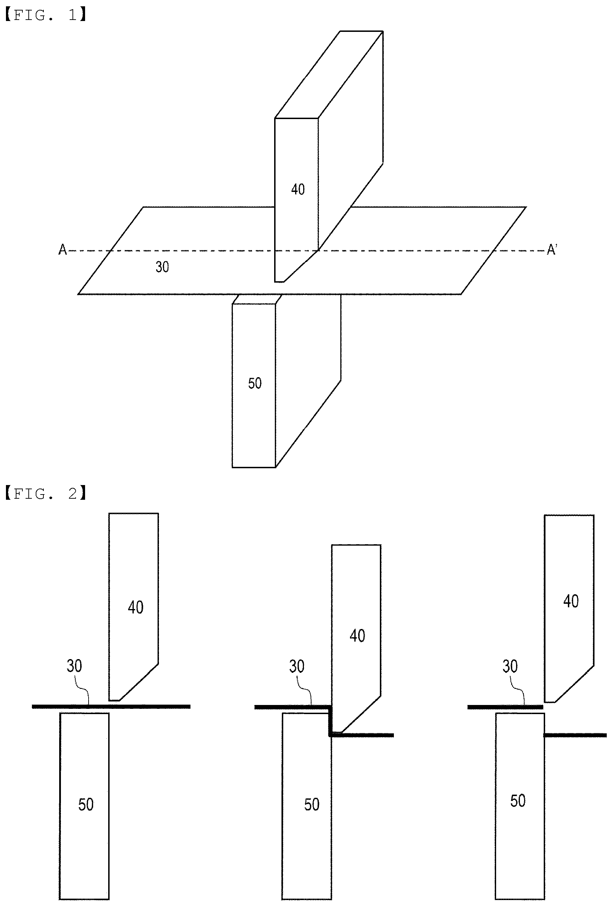

Referring to FIGS. 1 to 3, a first electrode 10 is disposed on an upper sheet, which is one of two sheets 30 that overlap each other, and a second electrode 20 is disposed on a lower sheet.

An upper cutter 40 and a lower cutter 50 configured to cut the sheets are disposed at the uppermost surface and the lowermost surface of the sheets 30, respectively.

The upper cutter 40 includes a first cutting surface 43, which is a surface configured to cut the sheets 30 while overlapping the lower cutter 50 a lower surface 44 configured to face the sheets 30 in parallel thereto, and an inclined portion 45, which is a surface inclined relative to the sheets. The lower cutter 50 includes a second cutting surface 53, which is a surface configured to cut the sheets 30 while overlapping the upper cutter 40, and an upper surface 54 configured to face the sheets 30 in parallel thereto.

The upper cutter 40 is configured such that the lower surface 44 and the first cutting surface 43 perpendicularly join each other, and the lower cutter 50 is configured such that the upper surface 54 and the second cutting surface 53 perpendicularly join each other. When the first cutting surface 43 and the second cutting surface 53 intersect each other, therefore, the sheets 30 are cut.

In the case in which the sheet cutting apparatus shown in FIGS. 1 to 3 is used, therefore, the sheets may be cut; however, the sheets may be transferred to a subsequent process in the state in which surplus portions of the sheets extending farther than outer peripheries of the electrodes are not fixed. At this time, the surplus portions of the sheets may be folded, or the sheets may be separated from each other.

In connection therewith, Patent Document 1 discloses a pair of blades configured to be rotated in opposite directions in order to cut a separator (a sheet) on which electrodes are sequentially disposed spaced apart from each other. In Patent Document 1, the blades are configured to cut two sheets in order to manufacture a mono-cell or a bi-cell including two sheets; however, the blades exhibit only a function of cutting the sheets.

Patent Document 2 discloses a separator (sheet) cutting apparatus including a cutter member configured to cut a sheet and a heat transfer unit having a heating member configured to heat the cutter member, wherein the sheet is heated to a melting temperature thereof or higher in order to cut the sheet.

In Patent Document 2, the sheet is melted in order to achieve an effect in that a reinforcement portion having a smooth surface is formed on a cut section of the sheet when the melted sheet is hardened, and only cutting of a single sheet is disclosed. Consequently, technology for preventing two or more sheets from being folded during a transfer process is not disclosed.

Patent Document 3 discloses a slitter configured to cut a separator (sheet), wherein first slitting knives and second slitting knives configured to cut the sheet each include a heating portion in order to shrink a cut section of the sheet.

In Patent Document 3, the heating portion is provided to shrink the cut section of the sheet; however, the first slitting knives and the second slitting knives are used in a slitting process. That is, Patent Document 3 does not disclose technology for preventing dislocation of two or more stacked sheets.

Unit cells for batteries and corresponding processes for manufacturing separator sheets thereof are known from each of US-A 2018 342 710 and EP-A 2 940 775.

Therefore, there is a need for technology capable of preventing exposure of an electrode stacked on a sheet due to folding of the sheet or change in position of the sheet when the sheet is moved to a subsequent electrode manufacturing process in the state in which the sheet is cut while not changing the electrode manufacturing process.

### (Prior Art Documents)

Korean Registered Patent Publication No. 2169008 (2020.10.16) ("Patent Document 1")
Korean Registered Patent Publication No. 2003471 (2019.07.18) ("Patent Document 2")
Korean Registered Patent Publication No. 1608634 (2016.03.29) ("Patent Document 3")

### [Disclosure]

### [Technical Problem]

The present invention has been made in view of the above problems, and it is an object of the present invention to provide a sheet cutting and fusion apparatus including a structure in which steps are formed at an upper cutter and a lower cutter such that two or more sheets can be simultaneously cut and fused.

It is another object of the present invention to provide a sheet cutting and fusion apparatus capable of simultaneously cutting and fusing sheets of a unit cell such that the state in which the sheets are stably fixed is maintained when the sheets are transferred to a subsequent process in the state in which the sheets are cut without increasing the number of electrode manufacturing steps.

### [Technical Solution]

A sheet cutting and fusion apparatus according to the present invention is applicable to any sheet as long as the sheet is thin, as in a separator used in a battery, and is configured such that a part of one sheet and a part of another sheet can be melted and coupled to each other.

In order to accomplish the above objects, the present invention provides a sheet cutting and fusion apparatus including an upper cutter disposed at the uppermost surface of at least two sheets that overlap each other; and a lower cutter disposed at the lowermost surface of the sheets, wherein the upper cutter includes a first cutting surface configured for contacting the lower cutter without any step when the upper cutter is moved vertically; a first fusion portion having a surface parallel to the first cutting surface in the state in which a first step is formed so as to extend from the first cutting surface; a lower surface configured to face the sheets; and a first connection portion having a curved corner that connects the lower surface and the first fusion portion to each other, and
the lower cutter includes a second cutting surface configured for contacting the upper cutter without any step when the lower cutter is moved vertically; a second fusion portion having a surface parallel to the second cutting surface in the state in which a second step is formed so as to extend from the second cutting surface; an upper surface configured to face the sheets; and a second connection portion having a curved corner that connects the upper surface and the second fusion portion to each other.

Each of the upper cutter and the lower cutter may include a structure capable of being heated.

The upper cutter and/or the lower cutter may be moved such that the first cutting surface and the second cutting surface come into contact with each other without any step, and the sheets may be cut due to compression, shearing force, or melting by an intersection between the first cutting surface and the second cutting surface.

Alternatively, the upper cutter and/or the lower cutter may be moved such that the first cutting surface and the second cutting surface overlap each other, and the sheets may be cut due to compression, shearing force, or melting by the first fusion portion and the second fusion portion.

Alternatively, the upper cutter and/or the lower cutter may be moved such that the first cutting surface and the second cutting surface overlap each other, and the sheets may be cut due to compression, shearing force, or melting by the first step and the second step.

When the sheets are disposed at any one of between the first cutting surface and the second cutting surface, between the first fusion portion and the second fusion portion, and between the first step and the second step, the sheets may be fused.

The first cutting surface, the first fusion portion, the second cutting surface, and the second fusion portion may have the same temperature, and the temperature thereof may be lower than the temperature of the first step and the second step.

The upper cutter may be disposed at the uppermost surface of the sheets, the lower cutter may be disposed at the lowermost surface of the sheets, and the lower surface of the upper cutter and the upper surface of the lower cutter may be disposed parallel to the sheets.

Alternatively, the upper cutter may be disposed at the uppermost surface of the sheets, the lower cutter may be disposed at the lowermost surface of the sheets, and the lower surface of the upper cutter and the upper surface of the lower cutter may be disposed inclined relative to the sheets.

The sheets may include a first sheet and a second sheet stacked in the state in which electrodes are interposed between the first sheet and the second sheet, the stacked electrodes and other stacked electrodes may be disposed spaced apart from each other by a predetermined distance, and the predetermined distance may be greater than the sum of the length from the first connection portion to the first cutting surface and the length from the second connection portion to the second cutting surface.

The height of each of the first step and the second step may be equal to or less than the thickness of at least two sheets that overlap each other.

### [Advantageous Effects]

As is apparent from the above description, a sheet cutting and fusion apparatus according to the present invention is capable of cutting at least two sheets that overlap each other and fusing outer peripheries of the sheets, whereby it is possible to prevent the sheets from being folded or crumpled during a transfer process.

In addition, the structure of each of an upper cutter and a lower cutter configured to cut the sheets may be changed in order to simultaneously cut and fuse the sheets, whereby it is possible to simultaneously cut and fuse the sheets through a signal process.

Consequently, a separate apparatus or space for sheet fusion is not required.

In addition, when stepped surfaces of the upper cutter and the lower cutter abut each other, the sheets may be melted and cut. In this case, necessity for managing parallelism tolerance of the upper cutter and the lower cutter may be lowered, and the replacement cycle of the upper cutter and the lower cutter due to wear thereof may be lengthened, whereby management of a manufacturing process is easy.

In addition, since the number of stops of the manufacturing process may be reduced, whereby yield may be improved.

### [Description of Drawings]

FIG. 1 is a schematic view of a conventional sheet cutting apparatus.
FIG. 2 is a sectional view showing a sequence of sheet cutting performed by the conventional sheet cutting apparatus.

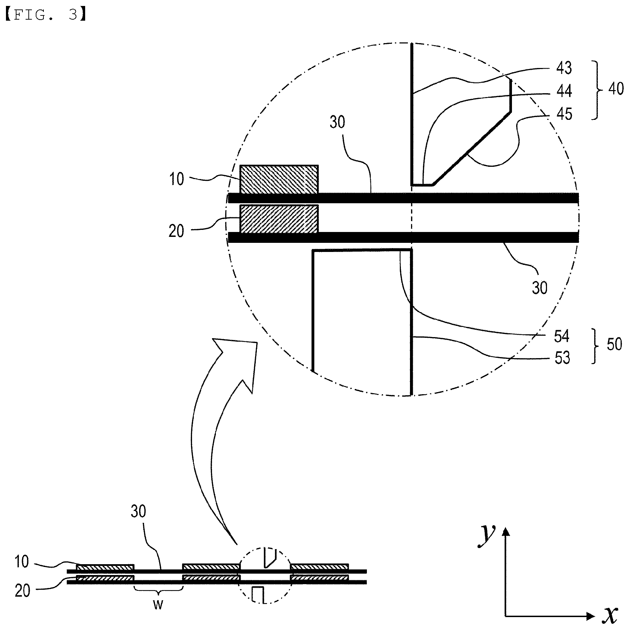

FIG. 3 is a schematic view showing the construction of an upper cutter and a lower cutter when the conventional sheet cutting apparatus is applied to two sheets.

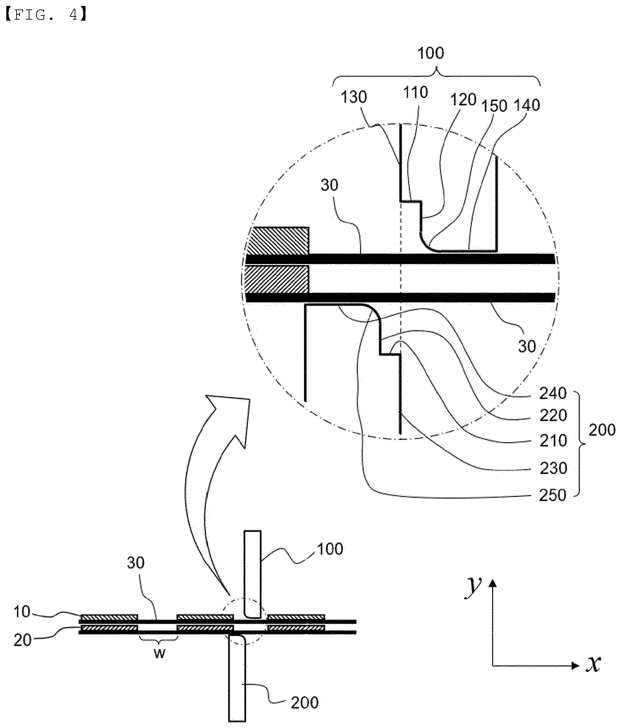

FIG. 4 is a view showing a sheet cutting and fusion apparatus according to a first embodiment of the present invention.

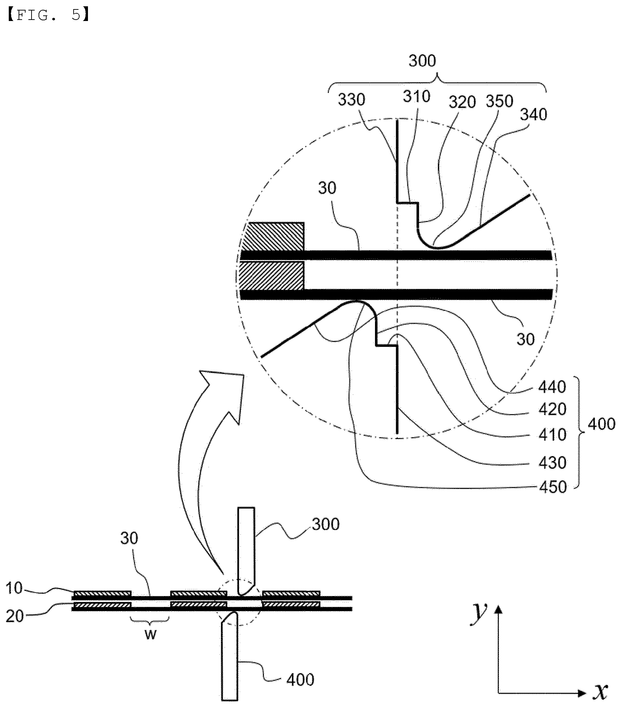

FIG. 5 is a view showing a sheet cutting and fusion apparatus according to a second embodiment of the present invention.

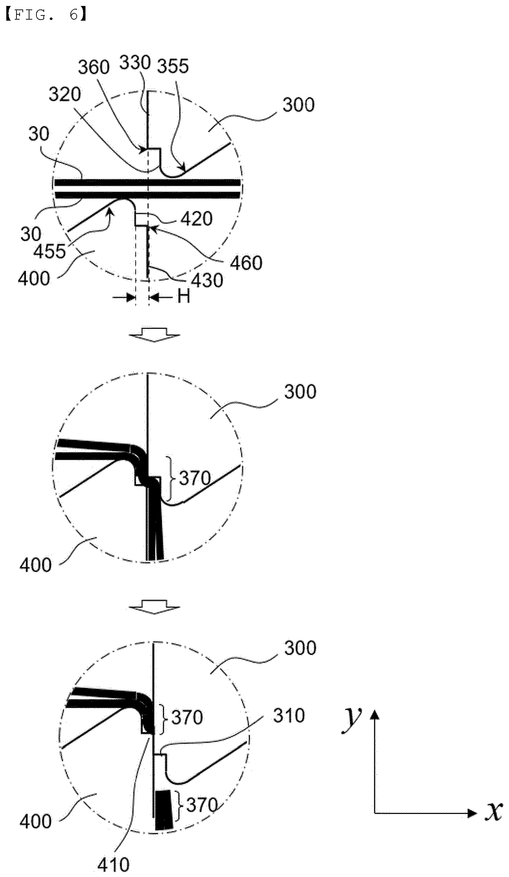

FIG. 6 is a view showing a process of cutting and fusing sheets using the sheet cutting and fusion apparatus according to the second embodiment of the present invention.

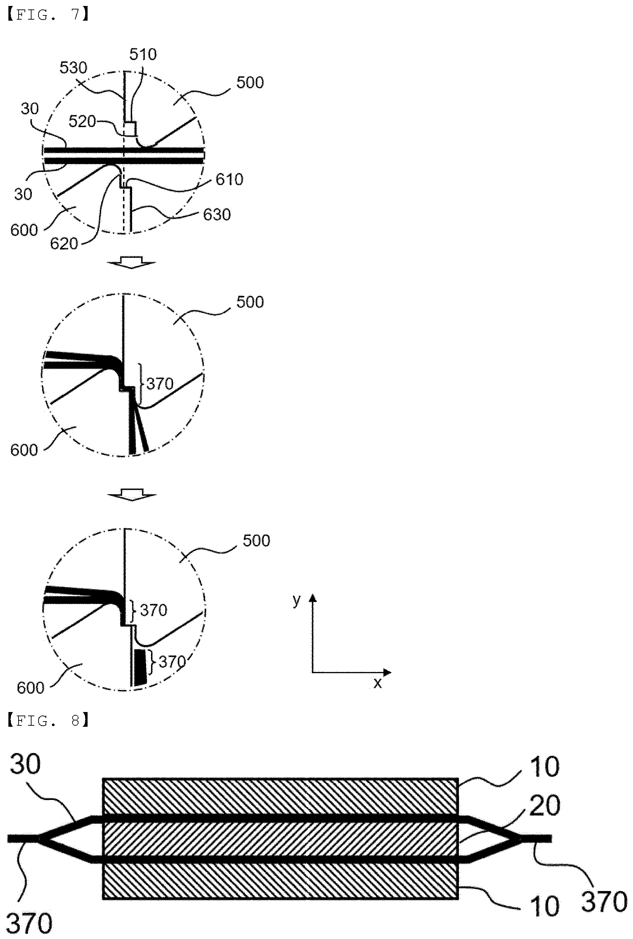

FIG. 7 is a view showing a process of cutting and fusing sheets using a sheet cutting and fusion apparatus according to a third embodiment of the present invention.
FIG. 8 is a view showing a unit cell manufactured using the sheet cutting and fusion apparatus according to the present invention.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a certain element is included does not mean that other elements are excluded, but rather means that such elements may be further included unless mentioned otherwise.

Also, in the description of the invention and the claims of the present application, singular forms are intended to include plural forms unless mentioned otherwise.

Also, in the description of the invention and the claims of the present application, "or" includes "and" unless mentioned otherwise. Therefore, "including A or B" means three cases, namely, the case including A, the case including B, and the case including A and B.

Hereinafter, embodiments of the present invention will be described in detail with reference to the accompanying drawings.

FIGS. 4 to 8 illustrate embodiments of a sheet cutting and fusion apparatus according to the present invention. In FIGS. 4 to 8, a sheet used for a battery, i.e. a separator, is described by way of example. However, the sheet cutting and fusion apparatus according to the present invention is applicable to any sheet as long as the sheet is thin and is configured such that a part of one sheet and a part of another sheet can be melted and coupled to each other.

Referring to FIG. 4, first electrodes 10 are disposed spaced apart from each other by a predetermined distance W on an upper surface of an upper sheet 30, which is one of sheets that overlap each other, and second electrodes 20 are disposed spaced apart from each other by the predetermined distance W on an upper surface of a lower sheet 30, which is the other of the sheets that overlap each other.

The first electrodes 10 and the second electrodes 20 pass through the sheet cutting and fusion apparatus, which is constituted by an upper cutter 100 and a lower cutter 200, in a state of being disposed so as to completely overlap each other in a y-axis direction, which is a stacking direction, whereby the two sheets 30 that overlap each other may be cut while outer peripheries of the sheets 30 are adhered to each other by thermal fusion.

Specifically, a sheet cutting and fusion apparatus according to a first embodiment includes an upper cutter 100 disposed at the uppermost surface of at least two sheets 30 that overlap each other and a lower cutter 200 disposed at the lowermost surface of the sheets 30, wherein the upper cutter 100 includes a first cutting surface 130 configured to come into contact with the lower cutter 200 without any step when the upper cutter is moved vertically, a first fusion portion 120 constituted by a surface parallel to the first cutting surface 130 in the state in which a first step 110 is formed so as to extend from the first cutting surface 130, a lower surface 140 configured to face the sheets 30, and a first connection portion 150, which is a curved corner that connects the lower surface 140 and the first fusion portion 120 to each other.

The lower cutter 200 includes a second cutting surface 230 configured to come into contact with the upper cutter 100 without any step when the lower cutter is moved vertically, a second fusion portion 220 constituted by a surface parallel to the second cutting surface 230 in the state in which a second step 210 is formed so as to extend from the second cutting surface 230, an upper surface 240 configured to face the sheets 30, and a second connection portion 250, which is a curved corner that connects the upper surface 240 and the second fusion portion 220 to each other.

The sheet cutting and fusion apparatus according to the present invention simultaneously performs a process of cutting the sheets and a process of thermally fusing the outer peripheries of the sheets. Specifically, each of the first connection portion 150, which connects the first fusion portion 120 of the first cutting surface 130 and the lower surface 140 to each other, and the second connection portion 250, which connects the second fusion portion 220 of the second cutting surface 230 and the upper surface 240 to each other, is formed in a curved shape.

In addition, the step is formed between the first cutting surface 130 and the first fusion portion 120, the step is formed between the second cutting surface 230 and the second fusion portion 220, and the first cutting surface 130 and the second cutting surface 230 are moved so as not to overlap each other.

Even though the lowermost end of the upper cutter and the uppermost end of the lower cutter intersect so as to be adjacent to each other, therefore, the sheets are not cut, since an empty space is formed therebetween.

In addition, each of the upper cutter and the lower cutter includes a structure capable of being heated.

That is, each of the upper cutter and the lower cutter may be configured such that the temperature thereof can be increased to a temperature at which the sheets are melted.

When the sheets are cut using the upper cutter and the lower cutter, the temperature of each of which has been increased to the sheet melting temperature, sheet adhesion portions at which the melted sheets are attached to each other are formed at opposite sides of a cutting line.

The upper cutter 100 and/or the lower cutter 200 may be moved such that the first cutting surface 130 and the second cutting surface 230 come into contact with each other without any step, and the sheets 30 may be cut due to compression, shearing force, or melting by intersection between the first cutting surface 130 and the second cutting surface 230.

The sheet cutting and fusion apparatus shown in FIG. 4 is configured such that, in the state in which the upper cutter 100 is disposed at the upper surface of one of the sheets 30 and the lower cutter 200 is disposed at the lower surface of the other of the sheets 30, the lower surface 140 of the upper cutter 100 and the upper surface 240 of the lower cutter 200 are disposed parallel to the sheets 30.

Consequently, the electrodes and the sheets 30 moving between the upper cutter 100 and the lower cutter 200 may be supported thereunder.

FIG. 5 is a view showing a sheet cutting and fusion apparatus according to a second embodiment of the present invention.

Referring to FIG. 5, first electrodes 10 are disposed spaced apart from each other by a predetermined distance W on an upper surface of an upper sheet 30, which is one of sheets that overlap each other, and second electrodes 20 are disposed spaced apart from each other by the predetermined distance W on an upper surface of a lower sheet 30, which is the other of the sheets that overlap each other.

The first electrodes 10 and the second electrodes 20 pass through the sheet cutting and fusion apparatus, which is constituted by an upper cutter 300 and a lower cutter 400, in a state of being disposed so as to completely overlap each other in a y-axis direction, which is a stacking direction, whereby the two sheets 30 that overlap each other may be cut while outer peripheries of the sheets 30 are adhered to each other by thermal fusion.

Specifically, the sheet cutting and fusion apparatus according to the second embodiment includes an upper cutter 300 disposed at the uppermost surface of at least two sheets 30 that overlap each other and a lower cutter 400 disposed at the lowermost surface of the sheets 30, wherein the upper cutter 300 includes a first cutting surface 330 configured to come into contact with the lower cutter 400 without any step when the upper cutter is moved vertically, a first fusion portion 320 constituted by a surface parallel to the first cutting surface 330 in the state in which a first step 310 is formed so as to extend from the first cutting surface 330, a lower surface 340 configured to face the sheets 30, and a first connection portion 350, which is a curved corner that connects the lower surface 340 and the first fusion portion 320 to each other.

The lower cutter 400 includes a second cutting surface 430 configured to come into contact with the upper cutter 300 without any step when the lower cutter is moved vertically, a second fusion portion 420 constituted by a surface parallel to the second cutting surface 430 in the state in which a second step 410 is formed so as to extend from the second cutting surface 430, an upper surface 440 configured to face the sheets 30, and a second connection portion 450, which is a curved corner that connects the upper surface 440 and the second fusion portion 420 to each other.

The sheet cutting and fusion apparatus according to the present invention simultaneously performs a process of cutting the sheets and a process of thermally fusing the outer peripheries of the sheets. Specifically, each of the first connection portion 350, which connects the first fusion portion 320 of the first cutting surface 330 and the lower surface 340 to each other, and the second connection portion 450, which connects the second fusion portion 420 of the second cutting surface 430 and the upper surface 440 to each other, is formed in a curved shape.

In addition, the step is formed between the first cutting surface 330 and the first fusion portion 320, the step is formed between the second cutting surface 430 and the second fusion portion 420, and the first cutting surface 330 and the second cutting surface 430 are moved so as not to overlap each other.

Even though the lowermost end of the upper cutter and the uppermost end of the lower cutter intersect so as to be adjacent to each other, therefore, the sheets are not cut, since an empty space is formed therebetween.

In addition, each of the upper cutter and the lower cutter includes a structure capable of being heated.

That is, each of the upper cutter and the lower cutter may be configured such that the temperature thereof can be increased to a temperature at which the sheets are melted.

When the sheets are cut using the upper cutter and the lower cutter, the temperature of each of which has been increased to the sheet melting temperature, sheet adhesion portions at which the melted sheets are attached to each other are formed at opposite sides of a cutting line.

The sheet cutting and fusion apparatus shown in FIG. 5 is configured such that, in the state in which the upper cutter 300 is disposed at the upper surface of one of the sheets 30 and the lower cutter 400 is disposed at the lower surface of the other of the sheets 30, the lower surface 340 of the upper cutter 300 and the upper surface 440 of the lower cutter 400 are disposed inclined relative to the sheets 30.

FIG. 6 is a view showing a process of cutting and fusing sheets using the sheet cutting and fusion apparatus according to the second embodiment of the present invention.

Referring to FIG. 6, when sheets 30 are interposed between the first cutting surface 330 and the second fusion portion 420 and between the second cutting surface 430 and the first fusion portion 320 in an overlapping state, the sheets are melted by the upper cutter 300 and the lower cutter 400, which are heated, whereby a thermally fused portion 370 is formed.

The upper cutter 300 is moved downwards such that the first cutting surface 330 and the second cutting surface 430 face each other in tight contact with each other, and the sheets are melted and adhered to each other before intersection between the first cutting surface 330 and the second cutting surface 430. When the first cutting surface 330 and the second cutting surface 430 intersect each other, particularly when the first corner 360 and the second corner 460 abut each other, the sheets 30 are cut.

Consequently, the two sheets are cut in the state in which the outer peripheries of the sheets are coupled to each other by thermal fusion while the sheets overlap each other.

In consideration of the fact that the two sheets are attached to each other in a state of being in tight contact with each other between the first cutting surface of the upper cutter and the second fusion portion of the lower cutter and between the first fusion portion of the upper cutter and the second cutting surface of the lower cutter, the height H of each of the first step 310 and the second step 410 may be equal to or less than the thickness of at least two sheets that overlap each other.

Referring to FIGS. 5 and 6 together, the sheets include a first sheet and a second sheet stacked in the state in which electrodes are interposed therebetween, the electrodes are disposed spaced apart from each other by a predetermined distance W, and the distance W is greater than the sum of the length from the first connection portion 350 to the first cutting surface 330 and the length from the second connection portion 450 to the second cutting surface 430. In the case in which the distance W between the electrodes is set, as described above, the electrodes are not pressed when the upper cutter and the lower cutter intersect each other, whereby it is possible to prevent damage to the electrodes. In addition, the electrodes may not be disposed at the first connection portion and the second connection portion, whereby it is possible to prevent the electrodes from being separated from the sheets.

FIG. 7 is a view showing a process of cutting and fusing sheets using a sheet cutting and fusion apparatus according to a third embodiment of the present invention.

Referring to FIG. 7, an upper cutter 500 is moved downwards such that a first cutting surface 530 of the upper cutter 500 and a second cutting surface 630 of a lower cutter 600 overlap each other, the first cutting surface 530 of the upper cutter 500 and the second cutting surface 630 of the lower cutter 600 do not intersect each other, and the upper cutter is moved downwards until a first step 510 comes into tight contact with a second step 610 in the state in which sheets are located therebetween.

The two sheets 30 are attached to each other in tight contact with each other between the first cutting surface 530 of the upper cutter and a second fusion portion 620 of the lower cutter and between a first fusion portion 520 of the upper cutter and the second cutting surface 630 of the lower cutter, whereby a thermally fused portion 370 is formed.

When the upper cutter 500 is further moved downwards and thus at least a part of the first step 510 and at least a part of the second step 610 face each other in tight contact with each other, the sheets 30 are cut.

In the sheet cutting and fusion apparatus having the structure as shown in FIG. 7, the sheets 30 may be cut due to compression, shearing force, or melting by the first step 510 and the second step 610. Even though a sharp structure, such as a cutter, is not provided at each of the first step 510 and the second step 610, therefore, a smooth cut section may be formed after the sections of the cut sheets are cooled.

The first cutting surface 530, the first fusion portion 520, the second cutting surface 630, and the second fusion portion 620 may have the same temperature, and the temperature of the first cutting surface 530, the first fusion portion 520, the second cutting surface 630, and the second fusion portion 620 may be lower than the temperature of the first step 510 and the second step 610, such that the sheets are melted and separated from each other at the first step 510 and the second step 610 and such that the sheets, brought into tight contact with each other between the first cutting surface 530 and the second fusion portion 620 and between the second cutting surface 630 and the first fusion portion 520, are melted and adhered to each other, as described above.

For example, a sheet according to the present invention may be a sheet including a polyolefin-based material. As another example, the sheet may include a substrate made of a polyolefin-based material, including polyethylene and polypropylene, and an inorganic coating layer formed on one surface or opposite surfaces of the substrate. The inorganic coating layer may be constituted by a mixture of an inorganic material capable of improving heat resistance and a binder configured to bind particles of the inorganic material.

For example, the temperature of the first cutting surface 530, the first fusion portion 520, the second cutting surface 630, and the second fusion portion 620 may be set to a range of 80°C to 150°C, and the temperature of the first step 510 and the second step 610 may be set to a range of 160°C to 200°C.

The upper cutter 500 and/or the lower cutter 600 may be moved such that the first cutting surface 530 and the second cutting surface 630 overlap each other, and the sheets may be fused or cut due to compression, shearing force, or melting by the first fusion portion 520 and the second fusion portion 620.

In the case in which any one of the sheet cutting and fusion apparatuses shown in FIGS. 4 to 7 is used, the sheets may be fused when the sheets are disposed at any one of between the first cutting surface and the second cutting surface, between the first fusion portion and the second fusion portion, and between the first step and the second step.

When the upper cutter 100, 300, or 500 and the lower cutter, 200, 400, or 600 of the sheet cutting and fusion apparatus according to the present invention are continuously used, edges of the first step 110, 310, or 510, the first cutting surface 130, 330, or 530, the second step 210, 410, or 610, and the second cutting surface 230, 430, or 630 may become dull. In the case in which the edges are slightly worn, only the first step 110, 310, or 510, the first cutting surface 130, 330, or 530, the second step 210, 410, or 610, and the second cutting surface 230, 430, or 630 may be newly machined. In the case in which the sizes of the first step 110, 310, or 510 and the second step 210, 410, or 610 are reduced, whereby cutting and fusion according to the present invention are not simultaneously performed, the lower surface 140 or 340, the first connection portion 150, 350, or 550, the upper surface 240 or 440, and the second connection portion 250, 450, or 650 are also machined.

FIG. 8 is a view showing a unit cell manufactured using the sheet cutting and fusion apparatus according to the present invention.

Referring to FIG. 8, the unit cell is a bi-cell configured such that a first electrode 10, a sheet 30, a second electrode 20, a sheet 30, and a first electrode 10 are stacked. Sheets of one-direction outer peripheries of the bi-cell parallel to each other are thermally fused, whereby thermally fused portions 370 are formed.

When the bi-cell is transferred to a subsequent electrode manufacturing process, therefore, the state in which the sheets are stably attached to each other may be maintained, whereby it is possible to prevent short circuit or outbreak of fire due to exposure of the electrodes.

Those skilled in the art to which the present invention pertains will appreciate that various applications and modifications are possible within the category of the present invention as defined in the present claims based on the above description.

### (Description of Reference Symbols)

10: First electrode
20: Second electrode
30: Sheet
40, 100, 300, 500: Upper cutters
110, 310, 510: First steps
120, 320, 520: First fusion portions
43, 130, 330, 530: First cutting surfaces
44, 140, 340: Lower surfaces
150, 350, 550: First connection portions
360: First corner
45: Inclined portion
50, 200, 400, 600: Lower cutters
210, 410, 610: Second steps
220, 420, 620: Second fusion portions
53, 230, 430, 630: Second cutting surfaces
54, 240, 440: Upper surfaces
250, 450, 650: Second connection portions
460: Second corner
370: Thermally fused portion
W: Distance

## Claims

1. A sheet cutting and fusion apparatus comprising:
an upper cutter (100,300,500) to be disposed at an uppermost surface of at least two sheets that overlap each other ; and
a lower cutter (200,400,600) disposed at a lowermost surface of the sheets,
wherein the upper cutter (100,300,500) comprises:
a first cutting surface (130,330,530) configured for contacting the lower cutter (200,400,600) without any step when the upper cutter (100,300,500) is moved vertically in operation;
a first fusion portion (120,320,520) having a surface parallel to the first cutting surface (130,330,530) such that a first step (110,310,510) is formed so as to extend from the first cutting surface (130,330,530); the first step being formed between the first cutting surface (130,330,530) and the first fusion portion (120,320,520);
a lower surface (140,340) configured to face the sheets (30); and
a first connection portion (150,350,550) having a curved corner that connects the lower surface (140,340) and the first fusion portion (120,320,520) to each other, and
wherein the lower cutter (200,400,600) comprises:
a second cutting surface (230,430,630) configured for contacting the upper cutter (100,300,500) without any step when the lower cutter (200,400,600) is moved vertically in operation;
a second fusion portion (220,420,620) having a surface parallel to the second cutting surface (230,430,630) such that a a second step (210,410,610) is formed so as to extend from the second cutting surface (230,430,630); the second step being formed between the second cutting surface (230,430,630) and the second fusion portion (220,420,620);
an upper surface (240,440) configured to face the sheets; and
a second connection portion (250,450,650) having a curved corner that connects the upper surface (240,440) and the second fusion portion (220,420,620) to each other.

2. The sheet cutting and fusion apparatus according to claim 1, wherein each of the upper cutter (100,300,500) and the lower cutter (200,400,600) comprises a structure capable of being heated.

3. The sheet cutting and fusion apparatus according to claim 1, wherein
the upper cutter (100,300) and/or the lower cutter (200,400) is configured to be moved such that the first cutting surface (130,330) and the second cutting surface (230,430) come into contact with each other without any step.

4. The sheet cutting and fusion apparatus according to claim 1, wherein
the upper cutter (500) and/or the lower cutter (600) is configured to be moved such that the first cutting surface (530) and the second cutting surface (630) overlap each other.

5. The sheet cutting and fusion apparatus according to claim 1, wherein a height of each of the first step (110,310,510) and the second step (210,410,610) is equal to or less than a thickness of at least two sheets that overlap each other.

6. A sheet cutting and fusion method carried out by the apparatus as defined in anyone of claims 1 to 5.

7. The sheet cutting and fusion method according to claim 6, wherein
the upper cutter (100,300) and/or the lower cutter (200,400) is moved such that the first cutting surface (130,330) and the second cutting surface (230,430) come into contact with each other without any step, and the sheets are cut due to compression, shearing force, or melting by an intersection between the first cutting surface (130,330,530) and the second cutting surface (230, 430,630).

8. The sheet cutting and fusion method according to claim 6, wherein
the upper cutter (500) and/or the lower cutter (600) is moved such that the first cutting surface (530) and the second cutting surface (630) overlap each other, and the sheets are cut due to compression, shearing force, or melting by the first fusion portion (120,320,520) and the second fusion portion (220,420,620).

9. The sheet cutting and fusion method according to claim 6, wherein
the upper cutter (500) and/or the lower cutter (600) is moved such that the first cutting surface (130,300,500)
and the second cutting surface (230,430,630) overlap each other, and the sheets are cut due to compression, shearing force, or melting by the first step (110,310,510) and the second step (210,410,610).

10. The sheet cutting and fusion method according to claim 6, wherein, when the sheets (30) are disposed at any one of between the first cutting surface (130,330,530) and the second cutting surface (230,430,630), between the first fusion portion (120,320,520) and the second fusion portion (220,420,620), and between the first step (110,310,510) and the second step (210,410,610), the sheets (30) are fused.

11. The sheet cutting and fusion method according to claim 9, wherein
the first cutting surface (130,330,530), the first fusion portion (120,320,520), the second cutting surface (230,430,630), and the second fusion portion (220,420,620) have an identical temperature, and
the temperature thereof is lower than a temperature of the first step (110,310,510) and the second step (210,410,610).

12. The sheet cutting and fusion method according to claim 6, wherein
the upper cutter (100,300,500) is disposed at the uppermost surface of the sheets (30),
the lower cutter (200,400,600) is disposed at the lowermost surface of the sheets, and
the lower surface (140,340) of the upper cutter (100,300,500) and the upper surface (240,440) of the lower cutter (200,400,600) are disposed parallel to the sheets (30).

13. The sheet cutting and fusion method according to claim 6, wherein
the upper cutter (100,300,500) is disposed at the uppermost surface of the sheets (30),
the lower cutter (200,400,600) is disposed at the lowermost surface of the sheets (30), and
the lower surface (140,340) of the upper cutter (100,300,500) and the upper surface (240,440) of the lower cutter (200,400,600) are disposed inclined relative to the sheets (30).

14. The sheet cutting and fusion method according to claim 6, wherein
the sheets (30) comprise a first sheet and a second sheet stacked in a state in which electrodes (10,20) are interposed between the first sheet and the second sheet,
the stacked electrodes and other stacked electrodes are disposed spaced apart from each other by a predetermined distance (W), and
the predetermined distance (W) is greater than a sum of a length from the first connection portion (150,350,550) to the first cutting surface (130,330,530) and a length from the second connection portion (250,450,650) to the second cutting surface (230,430,630).

## Patentansprüche

1. Bahnschneide- und Fusionsvorrichtung, umfassend:
eine obere Schneideinheit (100, 300, 500), welche an einer obersten Fläche wenigstens zweier Bahnen anzuordnen ist, welche einander überlappen; und
eine untere Schneideinheit (200, 400, 600), welche an einer untersten Fläche der Bahnen angeordnet ist,
wobei die obere Schneideinheit (100, 300, 500) umfasst:
eine erste Schneidfläche (130, 330, 530), welche dazu eingerichtet ist, die untere Schneideinheit (200, 400, 600) ohne Stufe zu kontaktieren, wenn die obere Schneideinheit (100, 300, 500) vertikal im Betrieb bewegt wird;
einen ersten Fusionsabschnitt (120, 320, 520), welcher eine Fläche, welche parallel zu der ersten Schneidfläche (130, 330, 530) ist, derart aufweist, dass eine erste Stufe (110, 310, 510) gebildet ist, um sich von der ersten Schneidfläche (130, 330, 530) zu erstrecken; wobei die erste Stufe zwischen der ersten Schneidfläche (130, 330, 530) und dem ersten Fusionsabschnitt (120, 320, 520) gebildet ist;
eine untere Fläche (140, 340), welche dazu eingerichtet ist, den Bahnen (30) zugewandt zu sein; und
einen ersten Verbindungsabschnitt (150, 350, 550), welcher eine gekrümmte Ecke aufweist, welche die untere Fläche (140, 340) und den ersten Fusionsabschnitt (120, 320, 520) miteinander verbindet, und
wobei die untere Schneideinheit (200, 400, 600) umfasst:
eine zweite Schneidfläche (230, 430, 630), welche dazu eingerichtet ist, die obere Schneideinheit (100, 300, 500) ohne Stufe zu kontaktieren, wenn die untere Schneideinheit (200, 400, 600) vertikal im Betrieb bewegt wird;
einen zweiten Fusionsabschnitt (220, 420, 620), welcher eine Fläche, welche parallel zu der zweiten Schneidfläche (230, 430, 630) ist, derart aufweist, dass eine zweite Stufe (210, 410, 610) gebildet ist, um sich von der zweiten Schneidfläche (230, 430, 630) zu erstrecken; wobei die zweite Stufe zwischen der zweiten Schneidfläche (230, 430, 630) und dem zweiten Fusionsabschnitt (220, 420, 620) gebildet ist;
eine obere Fläche (240, 440), welche dazu eingerichtet ist, den Bahnen zugewandt zu sein; und
einen zweiten Verbindungsabschnitt (250, 450, 650), welcher eine gekrümmte Ecke aufweist, welche die obere Fläche (240, 440) und den zweiten Fusionsabschnitt (220, 420, 620) miteinander verbindet.

2. Bahnschneide- und Fusionsvorrichtung nach Anspruch 1, wobei jede aus der oberen Schneideinheit (100, 300, 500) und der unteren Schneideinheit (200, 400, 600) eine Struktur aufweist, welche in der Lage ist, erwärmt zu werden.

3. Bahnschneide- und Fusionsvorrichtung nach Anspruch 1, wobei
die obere Schneideinheit (100, 300) und/oder die untere Schneideinheit (200, 400) dazu eingerichtet ist, derart bewegt zu werden, dass die erste Schneidfläche (130, 330) und die zweite Schneidfläche (230, 430) miteinander ohne Stufe in Kontakt kommen.

4. Bahnschneide- und Fusionsvorrichtung nach Anspruch 1, wobei
die obere Schneideinheit (500) und/oder die untere Schneideinheit (600) dazu eingerichtet ist, derart bewegt zu werden, dass sich die erste Schneidfläche (530) und die zweite Schneidfläche (630) überlappen.

5. Bahnschneide- und Fusionsvorrichtung nach Anspruch 1, wobei eine Höhe von jeder aus der ersten Stufe (110, 310, 510) und der zweiten Stufe (210, 410, 610) gleich wie oder geringer als eine Dicke von wenigstens zwei Bahnen ist, welche sich überlappen.

6. Bahnschneide- und Fusionsverfahren, welches durch die wie in einem der Ansprüche 1 bis 5 definierte Vorrichtung ausgeführt wird.

7. Bahnschneide- und Fusionsverfahren nach Anspruch 6, wobei
die obere Schneideinheit (100, 300) und/oder die untere Schneideinheit (200, 400) derart bewegt wird, dass die erste Schneidfläche (130, 330) und die zweite Schneidfläche (230, 430) miteinander ohne Stufe in Kontakt kommen, und
die Bahnen aufgrund von Kompression, Scherkraft oder Schmelzen durch eine Überschneidung zwischen der ersten Schneidfläche (130, 330, 530) und der zweiten Schneidfläche (230, 430, 630) geschnitten werden.

8. Bahnschneide- und Fusionsverfahren nach Anspruch 6, wobei
die obere Schneideinheit (500) und/oder die untere Schneideinheit (600) derart bewegt wird, dass sich die erste Schneidfläche (530) und die zweite Schneidfläche (630) miteinander überlappen, und
die Bahnen aufgrund von Kompression, Scherkraft oder Schmelzen durch den ersten Fusionsabschnitt (120, 320, 520) und den zweiten Fusionsabschnitt (220, 420, 620) geschnitten werden.

9. Bahnschneide- und Fusionsverfahren nach Anspruch 6, wobei
die obere Schneideinheit (500) und/oder die untere Schneideinheit (600) derart bewegt wird, dass sich die erste Schneidfläche (130, 300, 500) und die zweite Schneidfläche (230, 430, 630) miteinander überlappen, und
die Bahnen aufgrund von Kompression, Scherkraft oder Schmelzen durch die erste Stufe (110, 310, 510) und die zweite Stufe (210, 410, 610) geschnitten werden.

10. Bahnschneide- und Fusionsverfahren nach Anspruch 6, wobei, wenn die Bahnen (30) an einer aus der ersten Schneidfläche (130, 330, 530) und der zweiten Schneidfläche (230, 430, 630) angeordnet sind, zwischen dem ersten Fusionsabschnitt (120, 320, 520) und dem zweiten Fusionsabschnitt (220, 420, 620), und zwischen der ersten Stufe (110, 310, 510) und der zweiten Stufe (210, 410, 610), die Bahnen (30) fusioniert werden.

11. Bahnschneide- und Fusionsverfahren nach Anspruch 9, wobei
die erste Schneidfläche (130, 330, 530), der erste Fusionsabschnitt (120, 320, 520), die zweite Schneidfläche (230, 430, 630) und der zweite Fusionsabschnitt (220, 420, 620) eine identische Temperatur aufweisen, und
die Temperatur davon niedriger ist als eine Temperatur der ersten Stufe (110, 310, 510) und der zweiten Stufe (210, 410, 610).

12. Bahnschneide- und Fusionsverfahren nach Anspruch 6, wobei
die obere Schneideinheit (100, 300, 500) an der obersten Fläche der Bahnen (30) angeordnet ist,
die untere Schneideinheit (200, 400, 600) an der untersten Fläche der Bahnen angeordnet ist, und
die untere Fläche (140, 340) der oberen Schneideinheit (100, 300, 500) und die obere Fläche (240, 440) der unteren Schneideinheit (200, 400, 600) parallel zu den Bahnen (30) angeordnet sind.

13. Bahnschneide- und Fusionsverfahren nach Anspruch 6, wobei
die obere Schneideinheit (100, 300, 500) an der obersten Fläche der Bahnen (30) angeordnet ist,
die untere Schneideinheit (200, 400, 600) an der untersten Fläche der Bahnen (30) angeordnet ist, und
die untere Fläche (140, 340) der oberen Schneideinheit (100, 300, 500) und die obere Fläche (240, 440) der unteren Schneideinheit (200, 400, 600) relativ zu den Bahnen (30) geneigt angeordnet sind.

14. Bahnschneide- und Fusionsverfahren nach Anspruch 6, wobei
die Bahnen (30) eine erste Bahn und eine zweite Bahn umfassen, welche in einem Zustand gestapelt sind, in welchem Elektroden (10, 20) zwischen der ersten Bahn und der zweiten Bahn eingefügt sind,
die gestapelten Elektroden und andere gestapelte Elektroden um eine vorbestimmte Distanz (W) voneinander beabstandet angeordnet sind, und
die vorbestimmte Distanz (W) größer als eine Summe einer Länge von dem ersten Verbindungsabschnitt (150, 350, 550) zu der ersten Schneidfläche (130, 330, 530) und einer Länge von dem zweiten Verbindungsabschnitt (250, 450, 650) zu der zweiten Schneidfläche (230, 430, 630) ist.

## Revendications

1. Appareil de coupe et de fusion de feuilles comprenant :
un couteau supérieur (100, 300, 500) devant être disposé au niveau d'une surface la plus haute d'au moins deux feuilles qui se chevauchent ; et
un couteau inférieur (200, 400, 600) disposé au niveau d'une surface la plus basse des feuilles,
dans lequel le couteau supérieur (100, 300, 500) comprend :
une première surface de coupe (130, 330, 530) configurée pour être en contact avec le couteau inférieur (200, 400, 600) sans jeu lorsque le couteau supérieur (100, 300, 500) est déplacé verticalement en fonctionnement ;
une première partie de fusion (120, 320, 520) ayant une surface parallèle à la première surface de coupe (130, 330, 530) de sorte qu'une première marche (110, 310, 510) soit formée de manière à s'étendre à partir de la première surface de coupe (130, 330, 530) ;
la première marche étant formée entre la première surface de coupe (130, 330, 530) et la première partie de fusion (120, 320, 520) ;
une surface inférieure (140, 340) configurée pour faire face aux feuilles (30) ; et
une première partie de liaison (150, 350, 550) ayant un coin arrondi qui relie la surface inférieure (140, 340) et la première partie de fusion (120, 320, 520) l'une à l'autre, et
dans lequel le couteau inférieur (200, 400, 600) comprend :
une seconde surface de coupe (230, 430, 630) configurée pour être en contact avec le couteau supérieur (100, 300, 500) sans aucun jeu lorsque le couteau inférieur (200, 400, 600) est déplacé verticalement en fonctionnement ;
une seconde partie de fusion (220, 420, 620) ayant une surface parallèle à la seconde surface de coupe (230, 430, 630) de sorte qu'une seconde marche (210, 410, 610) soit formée de manière à s'étendre à partir de la seconde surface de coupe (230, 430, 630) ;
la seconde marche étant formée entre la seconde surface de coupe (230, 430, 630) et la seconde partie de fusion (220, 420, 620) ;
une surface supérieure (240, 440) configurée pour faire face aux feuilles ; et
une seconde partie de liaison (250, 450, 650) ayant un coin arrondi qui relie la surface supérieure (240, 440) et la seconde partie de fusion (220, 420, 620) l'une à l'autre.

2. Appareil de coupe et de fusion de feuilles selon la revendication 1, dans lequel chacun parmi le couteau supérieur (100, 300, 500) et le couteau inférieur (200, 400, 600) comprend une structure capable d'être chauffée.

3. Appareil de coupe et de fusion de feuilles selon la revendication 1, dans lequel le couteau supérieur (100, 300) et/ou le couteau inférieur (200, 400) sont configurés pour être déplacés de sorte que la première surface de coupe (130, 330) et la seconde surface de coupe (230, 430) entrent en contact l'une avec l'autre sans aucun jeu.

4. Appareil de coupe et de fusion de feuilles selon la revendication 1, dans lequel le couteau supérieur (500) et/ou le couteau inférieur (600) sont configurés pour être déplacés de sorte que la première surface de coupe (530) et la seconde surface de coupe (630) se chevauchent.

5. Appareil de coupe et de fusion de feuilles selon la revendication 1, dans lequel une hauteur de chacune parmi la première marche (110, 310, 510) et la seconde marche (210, 410, 610) est égale ou inférieure à une épaisseur d'au moins deux feuilles qui se chevauchent.

6. Procédé de coupe et de fusion de feuilles effectué par l'appareil selon l'une quelconque des revendications 1 à 5.

7. Procédé de coupe et de fusion de feuilles selon la revendication 6, dans lequel le couteau supérieur (100, 300) et/ou le couteau inférieur (200, 400) sont déplacés de sorte que la première surface de coupe (130, 330) et la seconde surface de coupe (230, 430) entrent en contact sans aucun jeu, et les feuilles sont coupées en raison de la compression, de la force de cisaillement ou de la fonte par une intersection entre la première surface de coupe (130, 330, 530) et la seconde surface de coupe (230, 430, 630).

8. Procédé de coupe et de fusion de feuilles selon la revendication 6, dans lequel le couteau supérieur (500) et/ou le couteau inférieur (600) sont déplacés de sorte que la première surface de coupe (530) et la seconde surface de coupe (630) se chevauchent, et les feuilles sont coupées en raison de la compression, de la force de cisaillement ou de la fonte par la première partie de fusion (120, 320, 520) et la seconde partie de fusion (220, 420, 620).

9. Procédé de coupe et de fusion de feuilles selon la revendication 6, dans lequel le couteau supérieur (500) et/ou le couteau inférieur (600) sont déplacés de sorte que la première surface de coupe (130, 300, 500) et la seconde surface de coupe (230, 430, 630) se chevauchent, et les feuilles sont coupées en raison de la compression, de la force de cisaillement ou de la fonte par la première marche (110, 310, 510) et la seconde marche (210, 410, 610).

10. Procédé de coupe et de fusion de feuilles selon la revendication 6, dans lequel, lorsque les feuilles (30) sont disposées à une quelconque position parmi entre la première surface de coupe (130, 330, 530) et la seconde surface de coupe (230, 430, 630), entre la première partie de fusion (120, 320, 520) et la seconde partie de fusion (220, 420, 620), et entre la première marche (110, 310, 510) et la seconde marche (210, 410, 610), les feuilles (30) sont fusionnées.

11. Procédé de coupe et de fusion de feuilles selon la revendication 9, dans lequel
la première surface de coupe (130, 330, 530), la première partie de fusion (120, 320, 520), la seconde surface de coupe (230, 430, 630) et la seconde partie de fusion (220, 420, 620) ont une température identique, et
la température de celles-ci est inférieure à une température de la première marche (110, 310, 510) et de la seconde marche (210, 410, 610).

12. Procédé de coupe et de fusion de feuilles selon la revendication 6, dans lequel
le couteau supérieur (100, 300, 500) est disposé au niveau de la surface la plus haute des feuilles (30),
le couteau inférieur (200, 400, 600) est disposé au niveau de la surface la plus basse des feuilles, et
la surface inférieure (140, 340) du couteau supérieur (100, 300, 500) et la surface supérieure (240, 440) du couteau inférieur (200, 400, 600) sont disposées parallèlement aux feuilles (30).

13. Procédé de coupe et de fusion de feuilles selon la revendication 6, dans lequel
le couteau supérieur (100, 300, 500) est disposé au niveau de la surface la plus haute des feuilles (30),
le couteau inférieur (200, 400, 600) est disposé au niveau de la surface la plus basse des feuilles (30), et
la surface inférieure (140, 340) du couteau supérieur (100, 300, 500) et la surface supérieure (240, 440) du couteau inférieur (200, 400, 600) sont disposées inclinées par rapport aux feuilles (30).

14. Procédé de coupe et de fusion de feuilles selon la revendication 6, dans lequel
les feuilles (30) comprennent une première feuille et une seconde feuille empilées dans un état dans lequel des électrodes (10, 20) sont interposées entre la première feuille et la seconde feuille,
les électrodes empilées et d'autres électrodes empilées sont disposées espacées les unes des autres par une distance prédéterminée (W), et
la distance prédéterminée (W) est supérieure à une somme d'une longueur de la première partie de liaison (150, 350, 550) à la première surface de coupe (130, 330, 530) et d'une longueur de la seconde partie de liaison (250, 450, 650) à la seconde surface de coupe (230, 430, 630).
